# EUROPEAN PATENT SPECIFICATION

(11) **EP 4 212 968 B1**
(45) Date of publication and mention of the grant of the patent: **28.10.2026**
(21) Application number: 21863954.0
(22) Date of filing: 08.07.2021
(51) Int. Cl.: H02P 21/05, H02P 21/06, H02P 23/04, H02P 27/04, H02P 27/08, H02P 29/00, G05B 11/36, G05B 13/02, G05B 19/404

(54) **MOTOR CONTROL DEVICE AND METHOD**
MOTORSTEUERVORRICHTUNG UND -VERFAHREN
DISPOSITIF ET PROCÉDÉ DE COMMANDE DE MOTEUR

(30) Priority: 07.09.2020 JP 2020149999
(43) Date of publication of application: 19.07.2023
(73) Proprietor: Hitachi Industrial Equipment Systems Co., Ltd., Tokyo 101-0021 (JP)
(72) Inventor: MATSUBARA, Mitsuru, Tokyo 100-8280 (JP); TAKANO, Yuuri, Tokyo 101-0021 (JP); UEI, Yusuke, Tokyo 101-0021 (JP); KONDO, Terutomo, Tokyo 101-0021 (JP); YANADA, Tetsuo, Tokyo 101-0021 (JP); TOBARI, Kazuaki, Tokyo 100-8280 (JP)
(74) Representative: MERH-IP Matias Erny Reichl Hoffmann Patentanwälte PartG mbB
(86) International application number: PCT/JP2021/025870
(87) International publication number: WO 2022/049896

(56) References cited:
- EP-B1- 2 278 189
- WO-A1-2020/250469
- JP-A- 2020 017 071
- US-A1- 2003 184 251
- US-A1- 2013 113 409
- SHIANG CHIH FU ET AL: "Analysis and suppression of torsional vibrations for the permanent magnet synchronous motor-load system", SYSTEMS, MAN AND CYBERNETICS, 2009. SMC 2009. IEEE INTERNATIONAL CONFERENCE ON, IEEE, PISCATAWAY, NJ, USA, 11 October 2009 (2009-10-11), pages 3359 - 3364, XP031574832, ISBN: 978-1-4244-2793-2
- LUCZAK DOMINIK: "Frequency analysis of mechanical resonance in direct drive", THE 12TH IEEE INTERNATIONAL WORKSHOP ON ADVANCED MOTION CONTROL, 25 March 2012 (2012-03-25), pages 1 - 5, XP093200351, Retrieved from the Internet <URL:https://ieeexplore.ieee.org/stampPDF/getPDF.jsp?tp=&arnumber=6197092&ref=aHR0cHM6Ly9zY2hvbGFyLmdvb2dsZS5jb20v> [retrieved on 20240828]

## Description

### TECHNICAL FIELD

The present invention relates to a motor control technique.

### BACKGROUND ART

In recent years, in the FA field, it is desirable that productivity is improved by optimally adjusting a motor control system and by shortening tact time. In a motor control system having a semi-closed configuration intended to control a control target machine, when rigidity of the machine attached to a motor is low, generally, an end portion of the machine (hereinafter, referred to as a machine end) vibrates at a low frequency of several Hz to 100 Hz due to a resonance and anti-resonance characteristic of the machine, and it takes time to perform positioning, and tact time cannot be shortened, which is a problem. In such a case, generally, vibration suppression control is used.

The vibration suppression control is one of adjustment elements of the motor control system, and a technique of optimally and automatically adjusting the vibration suppression control in a short time without intervention of human contributes to shortening tact time and improving productivity. Means for performing an automatic adjustment of vibration suppression control has been proposed in Patent Document 1.

Patent Document 1 discloses a technique of automatically adjusting vibration suppression control when a plurality of vibrations caused by mechanical resonance are observed from a response of a motor and vibration occurs at a machine end in a motor control system.

Specifically, the motor control system includes an estimation signal calculation unit that extracts a single vibration from the plurality of superimposed vibrations observed from the response of the motor; a resonance characteristic estimation calculation unit that identifies vibration characteristics (frequency and the like) based on the extracted single vibration; a feedforward control unit that suppresses vibration of the machine end occurring due to a plurality of the mechanical resonances; and a vibration suppression control setting unit that adjusts the feedforward control unit that is a vibration suppression control unit, based on the identified vibration characteristics. An automatic adjustment of vibration suppression control is performed by causing the estimation signal calculation unit to extract a single vibration in a predetermined order from a plurality of vibrations that have occurred and been observed when a machine is driven in a predetermined drive pattern, by causing the resonance characteristic estimation calculation unit to identify vibration characteristics of the extracted single vibration, and by causing the vibration suppression control setting unit to adjust the feedforward control unit based on the vibration characteristics identified by the vibration suppression control setting unit, and to iteratively execute adjustment in a predetermined drive pattern until identification is completed for all individuals of the plurality of vibrations.
Patent Document 2 discloses a plurality of notch filters which are arranged inside a control system for feedback-controlling a moving operation of a moving section of a motor and attenuate signal components having near frequencies with a notch frequency at a center in an input signal.
Non-patent Document 3 discloses methods for suppression of torsional vibrations for the permanent magnet synchronous motor-load system.

### CITATION LIST

### PATENT DOCUMENT

Patent Document 1: WO 2012/056868 A
Patent Document 2: US 2013/113409 A1
Non-Patent Document 3: SHIANG CHIH FU ET AL: "Analysis and suppression of torsional vibrations for the permanent magnet synchronous motor- load system", SYSTEMS, MAN AND CYBERNETICS, 2009.,11 October 2009, pages 3359-3364

### SUMMARY OF THE INVENTION

### PROBLEMS TO BE SOLVED BY THE INVENTION

In Patent Document 1, until the plurality of vibrations are excited in a predetermined drive pattern, and identification is completed for all vibration characteristics of the plurality of vibrations, the vibration suppression control setting unit needs to iteratively adjust the feedforward control unit that is a vibration suppression control unit, in the predetermined drive pattern, so that the adjustment takes time, which is a problem.

An object of the present invention is to provide a motor control device that adjusts a vibration suppression control unit in a short time and in real time to suppress vibration of a machine end when vibration caused by mechanical resonance is observed from a response of a motor and vibration occurs at the machine end.

### SOLUTIONS TO PROBLEMS

The above-described problems are solved in accordance with the appended set of claims. In particular, a motor control device includes: a vibration extraction filter that extracts a plurality of vibrations that are superimposed in a response of a motor control system due to a plurality of mechanical resonances, from a rotation speed response or a rotation position response of a motor; a sequential frequency estimation unit that sequentially estimates a frequency of each of the plurality of vibrations obtained from the vibration extraction filter, one by one, and that outputs a frequency estimation result as estimated frequency value series; a vibration suppression control unit that processes a command to be input to the motor control system, so as to suppress vibration occurring at an end portion of a machine attached to the motor; and a vibration suppression control designing unit that adjusts the vibration suppression control unit based on the estimated frequency value series.

### EFFECTS OF THE INVENTION

According to the present invention, it is possible to automatically suppress vibration of the machine end by adjusting the vibration suppression control unit in a short time and in real time.

### BRIEF DESCRIPTION OF THE DRAWINGS

Fig. 1 is a diagram showing a first embodiment applied to a motor FB control system.
Fig. 2 is a graph showing a frequency characteristic of a notch filter.
Fig. 3 is a diagram showing a sequential frequency estimation unit.
Fig. 4 is a graph showing the calculation of estimated frequency value series in the sequential frequency estimation unit.
Fig. 5 is a graph showing a process of a vibration suppression control designing unit.
Fig. 6 is a diagram showing the application of the first embodiment to a motor position FB control system.
Fig. 7 is a diagram showing the application of the first embodiment to a motor speed FB control system.

### MODE FOR CARRYING OUT THE INVENTION

Hereinafter, an embodiment will be described with reference to the drawings. Incidentally, in the drawings, components having a common function are denoted by the same reference sign, and a description thereof will not be repeated. In addition, hereinafter, "feedback", "notch filter", "low-pass filter", "high-pass filter", and "bandpass filter" may be abbreviated as "FB", "NF", "LPF", "HPF", and "BPF", respectively.

### First embodiment

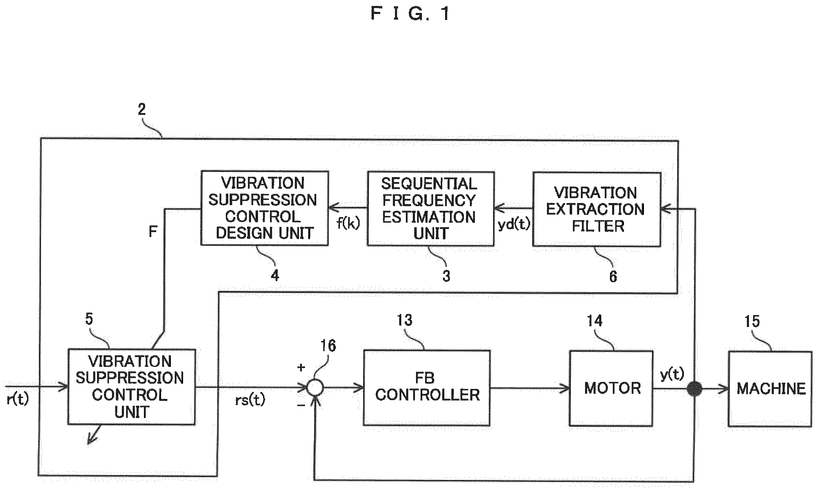

Fig. 1 is a diagram showing a configuration when an automatic adjustment unit 2 of the first embodiment is applied to a general motor FB control system having a semi-closed configuration. In a general motor FB control system that does not include the automatic adjustment unit 2, an operation amount of a FB controller 13 is provided to a motor 14, and a control target machine 15 is controlled such that a deviation between a command r(t) and an output y(t) of the motor 14 is zero.

Specifically, the output y(t) is a motor rotation position, the motor rotation position is measured using a sensor (for example, encoder), a deviation between the motor rotation position and the rotation position command r(t) is calculated by an adder-subtractor 16, and the FB controller 13 processes the deviation as a positional deviation. Incidentally, a device that drives the motor 14 (inverter or the like) or a controller that controls a speed or a current of the motor 14 is provided in a preceding stage of the motor 14, and these components are not shown in Fig. 1.

In the FB control system of Fig. 1, when rigidity of the machine attached to a rotating shaft of the motor is low, generally, an end portion of the machine (hereinafter, referred to as a machine end) may vibrate at a low frequency of several Hz to 100 HZ due to a resonance and anti-resonance characteristic of the machine, and it may take time to perform positioning.

In such a case, a vibration suppression control unit 5 is used for the purpose of suppressing vibration of the machine end and of shortening the positioning time. The vibration suppression control unit 5 processes the rotation position command r(t) to be input to the motor control system, so as to suppress vibration of the machine end attached to the motor.

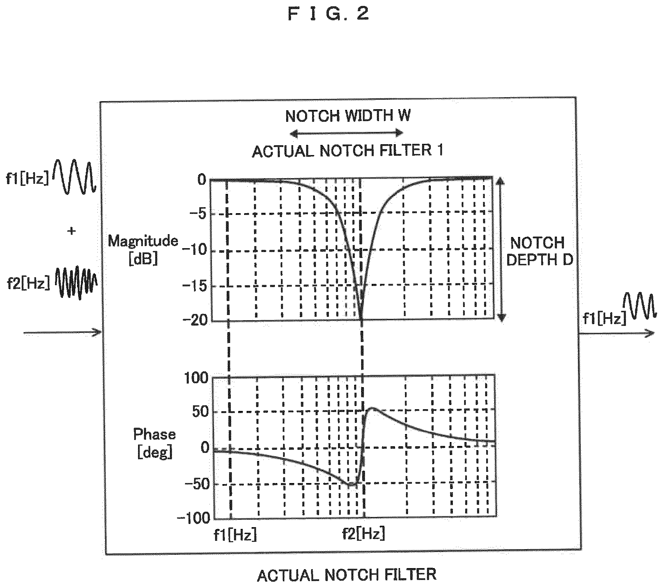

In the present embodiment, the vibration suppression control unit 5 is a notch filter (hereinafter, referred to as an actual notch filter), and a frequency characteristic of the actual notch filter is shown in Fig. 2. By causing a notch frequency of the actual notch filter to coincide with a frequency of vibration of the machine end, a frequency component that excites vibration of the machine end can be removed from the rotation position command r(t), and the vibration suppression control unit 5 can generate a rotation position command rs(t) that does not excite vibration of the machine end, by processing the rotation position command r(t).

A plurality of vibrations having different frequencies may be superimposed in a response of the machine end due to a plurality of resonance and anti-resonance characteristics of the machine. Incidentally, each vibration generally has a different vibration amplitude or damping time due to each resonance and anti-resonance characteristic.

When a plurality of vibrations are superimposed in a response of the machine end, vibration of the machine end can be suppressed by applying an actual notch filter to each vibration. When N vibrations having frequencies f1 to fN are superimposed at the machine end, N stages of actual notch filters of a notch frequency fk(k = 1 ... N) may be applied in series. However, when the actual notch filters are provided in multiple stages, a delay of the rotation position command r(t) increases, which may consequently not lead to shortening of the positioning time.

In this case, for the purpose of shortening the positioning time, the vibration suppression control unit 5 may adopt other vibration suppression control means based on a control target model, instead of the actual notch filter. Incidentally, even when the other vibration suppression control means is adopted, it is necessary to know at least the frequency of vibration of the machine end.

The automatic adjustment unit 2 automatically adjusts the vibration suppression control unit 5 without prior information about the control target machine 15, and includes a sequential frequency estimation unit 3, a vibration suppression control designing unit 4, the vibration suppression control unit 5, and a vibration extraction filter 6.

Incidentally, in the present embodiment, the automatic adjustment unit 2 is intended to suppress vibration of a low frequency of several Hz to 100 Hz at the machine end, and does not suppress vibration of a frequency of 100 [Hz] or more at the machine end.

The vibration extraction filter 6 extracts a plurality of vibrations that are superimposed in a response of the motor control system due to a plurality of mechanical resonances, from a rotation speed response or a rotation position response of the motor. In Fig. 1, the vibration extraction filter 6 plays a role of removing a normal response component of the rotation position response y(t), and of extracting and outputting only a vibration component related to vibration of the machine end, as yd(t) .

In the present embodiment, the vibration extraction filter 6 is a bandpass filter that passes signals only in a predetermined frequency band of fL to fH. Incidentally, the vibration extraction filter 6 may be a combination of a high-pass filter and a low-pass filter.

When a plurality of vibrations are superimposed in a response of the machine end, a plurality of vibrations are also superimposed in the rotation position response y(t). The vibration extraction filter 6 is designed to have a sufficiently wide frequency band of fL to fH, so as to be able to extract the plurality of vibrations. As a result, the plurality of vibrations are observed as yd(t).

The sequential frequency estimation unit 3 sequentially estimates a frequency of each of the plurality of vibrations yd(t) obtained from the vibration extraction filter 6, one by one, and outputs a frequency estimation result as estimated frequency value series f(k) that are one-dimensional point sequence data.

In the present embodiment, for simplicity of description, yd(t) is observed as two types of vibrations being superimposed, the vibrations being formed of vibration yd1(t) having a frequency of f1, a maximum vibration amplitude value of M1, and a vibration continuation time of T1 and vibration yd2(t) having a frequency of f2, a maximum vibration amplitude value of M2, and a vibration continuation time of T2 (here, f1 < f2 ≤ 100 [Hz]).

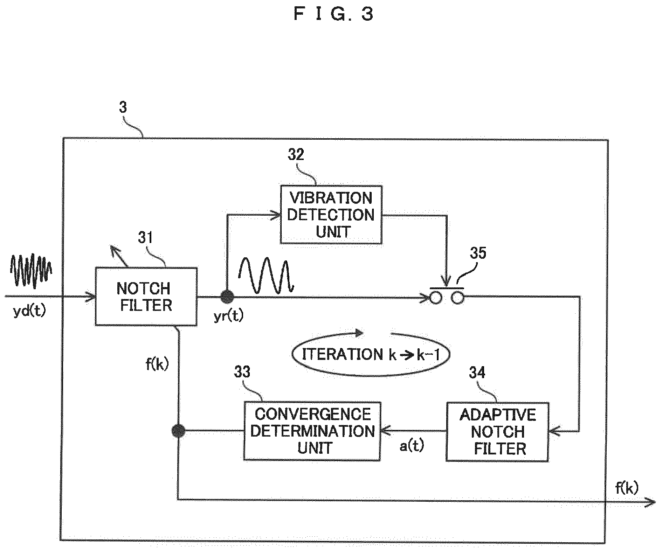

As shown in Fig. 3, the sequential frequency estimation unit 3 includes a notch filter 31 as a vibration removal unit that removes only a predetermined frequency component; an adaptive notch filter 34 as an adaptive estimation unit that sequentially estimates frequencies of the vibrations from a vibration waveform and that sequentially outputs estimation values as frequency estimation value signals; a vibration detection unit 32; and a convergence determination unit 33 that determines whether or not the frequency estimation value signals have converged and that outputs frequency estimation values of the frequency estimation value signals when it is determined that the frequency estimation value signals have converged, as the estimated frequency value series.

The notch filter 31 has the frequency characteristic shown in Fig. 2, and a notch frequency Nf [Hz] of the notch filter 31 changes a frequency component to be removed based on the estimated frequency value series f(k) [Hz] output by the convergence determination unit 33.

The notch filter 31 removes only a frequency component of the notch frequency Nf [Hz] from the plurality of vibrations yd(t), and outputs a signal obtained by removing the frequency component of the notch frequency Nf from the plurality of vibrations yd(t), as residual vibration yr(t).

In an initial state of the start of adjustment by the automatic adjustment unit 2, the notch frequency Nf [Hz] of the notch filter 31 is set to a value that is sufficiently larger than 100 [Hz] as an upper limit of a band of vibration suppression of the machine end which the vibration suppression control unit is responsible for, and accordingly, both vibrations of the frequencies f1 and f2 are output as the residual vibrations yr(t) without being removed by the notch filter 31.

After the start of adjustment by the automatic adjustment unit 2, the notch frequency Nf [Hz] of the notch filter 31 is updated as Nf = f(k) each time that k of the estimated frequency value series f(k) (k = 1 ...) output by the convergence determination unit 33 is updated. After the completion of adjustment by the automatic adjustment unit 2, the notch frequency Nf [Hz] is set to a value sufficiently larger than 100 [Hz], and returns to the initial state.

The vibration detection unit 32 determines that vibration is detected, when vibration continues with a predetermined amplitude or more for a predetermined time or more is observed in the residual vibration yr(t), and otherwise, determines that no vibration is detected.

The adaptive notch filter 34 and the convergence determination unit 33 operate only when the vibration detection unit 32 has determined that vibration is detected.

If one of two types of vibrations of yd(t) has an amplitude of 0 (for example, M2 = 0) and the notch frequency Nf [Hz] of the notch filter 31 is f1, ideally, no vibration is observed from the residual vibration yr(t), and the vibration detection unit 32 determines that no vibration is detected. In this case, operations of the adaptive notch filter 34 and the convergence determination unit 33 are not started.

The adaptive notch filter 34 sequentially estimates frequencies of main vibration of the residual vibration yr(t). The adaptive notch filter 34 having a notch filter and an adaptive algorithm uses the following (Equation 1) and (Equation 2) that are good in calculation cost.

□ Notch filter
   [Equation 1] $\begin{matrix}x \left(t\right) = {y}_{r} \left(t\right) - a \left(t\right) \left(1+{r}_{L}\right) ⋅ x \left(t-1\right) - {r}_{L} ⋅ x \left(t-2\right) \\ e \left(t\right) = x \left(t\right) + 2 a \left(t\right) ⋅ x \left(t-1\right) + x \left(t-2\right)\end{matrix}$ (Equation 1)
□ Adaptive algorithm

   [Equation 2] $a \left(t+1\right) = a \left(t\right) - μ \left(a\left(t\right)\right) ⋅ L \left(e\left(t\right)\right) ⋅ sgn \left(x\left(t-1\right)\right)$ (Equation 2)

Here, a(t) is a notch frequency (here, the unit is not [Hz]), rL is a notch width, µ is an update gain for adjusting an update amount, L(Y) indicates a limiter process for Y, sgn indicates a sign function, x(t) indicates a notch filter state, and e(t) indicates a notch filter output.

The adaptive notch filter 34 includes a notch filter expressed by (Equation 1), and the adaptive algorithm of (Equation 2) adaptively adjusts a notch frequency a(t) of the notch filter of (Equation 1).

Specifically, the adaptive algorithm of (Equation 2) iteratively operates such that the notch filter of (Equation 1) removes main vibration of the residual vibration yr(t) that is an input, and a(t) when the main vibration of the residual vibration yr(t) has been completely removed by the notch filter of (Equation 1) is a frequency of the main vibration.

Therefore, it can be said that the adaptive notch filter 34 is sequential frequency estimation means for the residual vibration yr(t), and a(t) is a frequency estimation value signal for the residual vibration yr(t).

Incidentally, a(t) has a nonlinear characteristic with respect to frequency [Hz], and shows strong nonlinearity particularly when a(t) is in a low range of 100 [Hz] or less. Specifically, the lower range the frequency is in, the smaller an absolute value of a change amount of a(t) per absolute value of a unit frequency change amount [Hz] tends to become. Therefore, if the update gain µ is constant when the low range is estimated, the update gain is too large, the adaptive algorithm of (Equation 2) vibrates and does not reach convergence, which is a problem.

Therefore, in the present embodiment, in order to address this problem, the update gain is µ(a(t)) and is changed according to the frequency estimation value signal. As one example, µ(a(t)) is expressed by the following (Equation 3).

[Equation 3] $μ \left(a\left(t\right)\right) = \frac{{μ}_{a}}{\sqrt{1 - {a}_{1}^{2}}} ⋅ \sqrt{1 - {a}^{2} \left(t\right)}$ (Equation 3)

Here, a1 is a design frequency and µa is a basic update gain.

When µa is an appropriate update gain at the design frequency al, according to µ(a(t)) of (Equation 3), the update gain at the frequency a(t) < a1 is regarded as having the same magnitude as µa. Accordingly, it is possible to solve the problem that the adaptive algorithm of (Equation 2) vibrates and does not reach convergence at the frequency a(t) < a1.

Incidentally, (Equation 3) may be implemented to hold data of µ and a(t) in a tabular form such as a map for the reduction of calculation cost. In addition, µ(a(t)) may be another function having an effect similar to that of (Equation 3).

When a(t) of the adaptive notch filter 34 converges, the notch filter of (Equation 1) can be regarded as having completely removed the main vibration of the residual vibration yr(t), and it can be determined that the frequency of the main vibration of the residual vibration yr(t) has been completely estimated.

Means for determining whether or not the frequency estimation value signal a(t) has converged is the convergence determination unit 33. The convergence determination unit 33 receives the frequency estimation value signal a(t) to determine whether or not a(t) has converged. However, as described above, since the frequency estimation value signal a(t) has a nonlinear characteristic with respect to frequency [Hz], it is not easy to determine whether or not the convergence has occurred, based on a(t).

The convergence determination unit 33 includes conversion means for converting a(t) into units of frequency [Hz], and accordingly, a(t) is converted into f(t) [Hz]. Therefore, the convergence determination unit 33 determines whether or not a(t) has converged, based on f(t) [Hz].

Specifically, when a change width of f(t) within a predetermined time is a predetermined value [Hz] or less, it is determined that a(t) has converged, f(t) at this time is set to a k-th (k = 1 ...) value and is held as f(k), and the convergence determination is continued sequentially. k is counted up each time it is determined that a(t) has converged, and the value is held as f(k), and as a result, the convergence determination unit 33 outputs f(k) (k = 1 ...) as estimated frequency value series.

The sequential frequency estimation unit 3 is executed for a predetermined time from the start to the completion of adjustment by the automatic adjustment unit 2, and the estimated frequency value series f(k) (k = 1 ...) for the predetermined time can be obtained from the sequential frequency estimation unit 3.

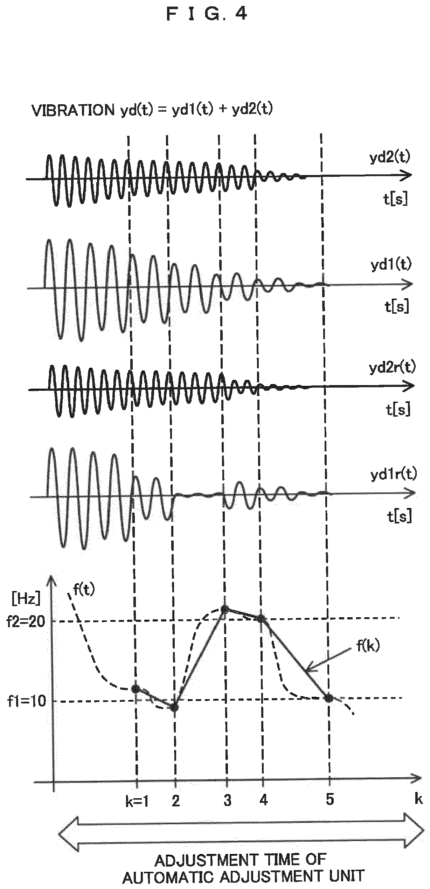

Fig. 4 shows a mode of the calculation of the estimated frequency value series f(k) in the sequential frequency estimation unit 3. In Fig. 4, when the frequencies of the vibrations yd1(t) and yd2(t) are f1 = 10 and f2 = 20, respectively, and the sequential frequency estimation unit 3 operates during an adjustment time of the automatic adjustment unit 2 for the vibration yd(t) in which both vibrations are superimposed, f(t) is shown by a dashed line, and the estimated frequency value series f(k) for which convergence determination is performed for f(t) is shown by a solid line.

In addition, in Fig. 4, each of yd1r(t) and yd2r(t) is shown in yr(t) = ydlr(t) + yd2r(t), which is an output of the notch filter 31.

The frequency f1 of the vibration yd1(t) that a main vibration component of the vibration yd(t) at the convergence determination k = 1 and 2 is estimated by the adaptive notch filter 34, and f(1) and f(2) are applied to the notch filter 31. For this reason, at k = 1 and 2, the amplitude of ydlr(t) becomes small, and the main vibration component of the vibration yd(t) is yd2(t).

Accordingly, the frequency f2 of yd2(t) at k = 3 and 4 is estimated by the adaptive notch filter 34, f(3) and f(4) are applied to the notch filter 31, and the main vibration component of the vibration yd(t) is yd1(t).

The adaptive notch filter 34 estimates a frequency of yd1(t) to obtain f(5), but k = more than 5, the vibration yd(t) is damped and no vibration occurs, so that the vibration detection unit 32 determines that no vibration is detected, and stops the operations of the adaptive notch filter 34 and the convergence determination unit 33.

As described above, the sequential frequency estimation unit 3 of the present embodiment is characterized in being able to preferentially and alternately estimate frequencies of main vibration at high speed even when one or more damping vibrations are superimposed and observed as yd(t).

When the vibration amplitude, the frequency, the damping (continuation) time, and the number of superimposed vibrations are unknown, it is not possible to always accurately estimate a frequency of each vibration using, for example, general identification means such as a sequential least square identification method. The reason is that, for example, in the case of yd(t) in which two types of the vibrations yd1 and yd2 are superimposed and of a damping time of T1 < T2, the vibration system is a two-vibration system at 0 to T1, but is a one-vibration system at T1 to T2, and the order of the vibration system changes at the unknown damping (continuation) times T1 and T2, which is a time deformation identification problem.

On the other hand, the sequential frequency estimation unit 3 has an advantage of being able to appropriately estimate frequencies of vibrations at high speed even when the damping (continuation) time and the number of superimposed vibrations are unknown.

The vibration suppression control designing unit 4 adjusts the vibration suppression control unit 5 based on the estimated frequency value series. In the present embodiment, the vibration suppression control designing unit 4 performs unsupervised clustering.

Specifically, the estimated frequency value series f(k) (k = 1 ...) obtained for a predetermined adjustment time of the automatic adjustment unit 2 are regarded as point cloud data, unsupervised clustering such as a k-means method is executed on the estimated frequency value series f(k), the number of clusters obtained accordingly is set as the number N of superimposed vibrations, and an average value of each cluster is set as an estimation value fk (k = 1 ... N) of the frequency of each vibration. Incidentally, when a distance between centers of gravity of the clusters is a predetermined value or less, the clusters are merged together.

The vibration suppression control designing unit 4 sends an output F such as the number N of superimposed vibrations and the estimation value fk (k = 1 ... N) of the frequency of each vibration to the vibration suppression control unit 5, and the vibration suppression control unit 5 provides N stages of actual notch filters having the notch frequency fk in series, so that the process of the automatic adjustment unit 2 is completed.

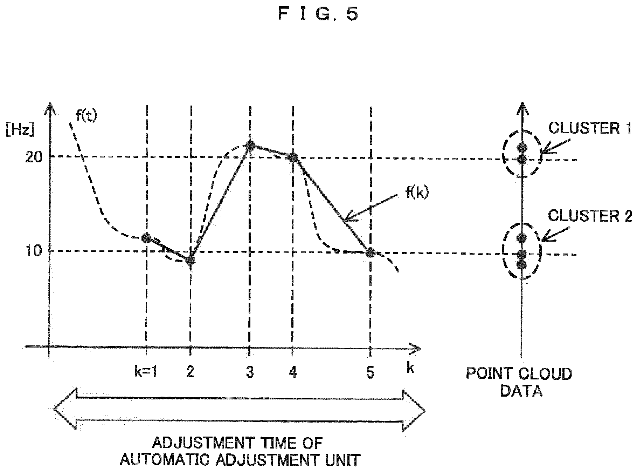

Fig. 5 shows the process of the vibration suppression control designing unit 4 for the f(k) shown in Fig. 4. A cluster 1 is formed of f(1), f(2), and f(5), and a cluster 2 is formed of f(3) and f(4), and since the number of the clusters is 2, the number N of superimpositions of vibrations is 2, and a frequency of each vibration is each of average values (f(1) + f(2) + f(5))/3 and (f(3) + f(4))/2 of the clusters.

Incidentally, since the notch filter 31 is disabled and the superimposition of vibrations is remarkable at f(1) immediately after the start of automatic adjustment, f(t) tends to have a low accuracy as a frequency estimation value. For this reason, a process of thinning out a first half of the estimated frequency value series f(k) (k = 1 ...) before clustering may be added.

It is considered that the vibration suppression control designing unit 4 adopts the following algorithm when the number N of superpositions of vibrations is 1 to 2, in addition to adopting the unsupervised clustering described above. The following algorithm is characterized in having good processing cost compared to the k-means method.

S1: An average value Ma of point cloud data is calculated, and two clusters C1 and C2 are generated depending on the magnitude of Ma.

S2: An average value Mc1 of C1 and an average value Mc2 of C2 are calculated, and Te = |Mc1 - Mc2| is calculated.

S3: when Te is a predetermined value or more, the number N of superimposed vibrations = 2, and frequency estimation values of the vibrations are f1 = Mc1 and f2 = Mc2. When Te is less than the predetermined value, the number N of superimposed vibrations = 1, and a frequency estimation value of the vibration is f1 = Ma.

If vibration is observed in yd(t) in one operation of the control target machine 15, and the estimated frequency value series f(k) are obtained, the predetermined adjustment time of the automatic adjustment unit 2 may be only the time it takes to perform one operation of the control target machine 15.

In addition, when a large number of the estimated frequency value series f(k) (k = 1 ...) want to be acquired and the accuracy of estimation of frequencies of vibrations wants to be increased, the time required for a plurality of operations of the control target machine 15 may be set as the predetermined adjustment time of the automatic adjustment unit 2.

According to the present embodiment, when vibrations caused by resonance and anti-resonance characteristics of one or more control target machines are observed from a response of the motor control system, and vibration occurs at machine ends, it is not necessary to identify particularly the number of the mechanical resonances in advance.

In Patent Document 1, the vibration suppression control setting unit causes the feedforward control unit that is a vibration suppression control unit to iteratively adjust a plurality of resonance characteristics. According to the present embodiment, in the initial state where the adjustment of the vibration suppression control unit is started, the vibration suppression control unit 5 does not process command to be input to the motor control system, and after the vibration suppression control designing unit 4 has completed the adjustment of the vibration suppression control unit 5 based on the estimated frequency value series, the vibration suppression control unit 5 starts processing of the command to be input to the motor control system. In the present embodiment, it is possible to provide an automatic adjustment method for motor control in which vibration of the machine end can be suppressed by adjusting the vibration suppression control unit 5 in a short time and in real time, and a motor control device with the automatic adjustment unit 2.

Incidentally, in the present embodiment, the automatic adjustment unit 2 has the motor rotation position y(t) as an input, but from the viewpoint of the ease of extracting a vibration component, a motor rotation position deviation, an output of the FB controller 13, a motor rotation speed deviation, an output of a speed FB controller, a motor rotation speed response, or the like may be used as an input to the automatic adjustment unit 2.

In addition, a width of the actual notch filter may be variable based on the magnitude of a variance of clusters generated by the vibration suppression control designing unit 4. The reason is that when the variance of the clusters is large, expecting the accuracy of frequency estimation values is considered to be difficult, so that it may be effective to set the width of the actual notch filter to a large value to remove a wide range of frequency components.

In addition, a plurality of stages of the notch filters 31 may be configured to be arranged in series, and the estimated frequency value series f(k) may be appropriately applied to each notch frequency. Accordingly, even when the superposition of a large number of vibrations is observed from yd(t), the accuracy of estimation of frequencies cannot be expected. However, in this case, attention is paid to the point that a process of managing which notch filter f(k) is applied is separately required.

In addition, the automatic adjustment unit 2 may have a function of adjusting a gain of the FB controller 13. The reason is that when the vibration suppression control unit 5 is adjusted by the automatic adjustment unit 2 and the adjustment is effective, vibration of the machine end is suppressed, and even in the case of a higher FB control gain, the machine end can be controlled and positioned without occurrence of vibration.

The motor control device including the automatic adjustment unit 2, the adder-subtractor 16, and the FB controller 13 in Fig. 1 includes a central processing unit (CPU) that is not shown. The CPU reads out a program and executes the program, so that the automatic adjustment unit 2, the adder-subtractor 16, and the FB controller 13 including processing units of the vibration extraction filter 6, the sequential frequency estimation unit 3, the vibration suppression control designing unit 4, and the vibration suppression control unit 5 execute processes of the processing units. All or some of the processing units can be configured as hardware such as an application specific integrated circuit (ASIC) or a field programmable gate array (FPGA).

According to the present embodiment, in the motor FB control system having a semi-closed configuration, when vibration occurs at the machine end, it is not necessary to identify particularly the number of the mechanical resonances in advance, and it is possible to suppress vibration of the machine end by adjusting the vibration suppression control unit in a short time and in real time.

### Second embodiment

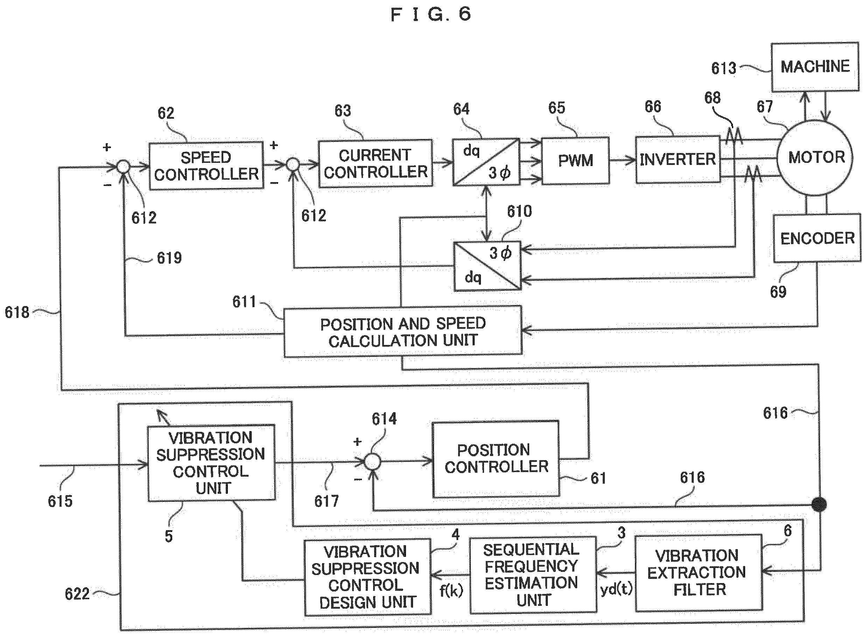

A second embodiment is an example in which the first embodiment is applied to a motor control device. Description of the same items as in the first embodiment will not be repeated. As shown in Fig. 6, the second embodiment is an embodiment in which the automatic adjustment unit 2 shown in Fig. 1 is applied to a semi-closed position FB control system of an AC servomotor, as an automatic adjuster 622. A system in which the automatic adjuster 622 is not included in Fig. 6 is a generally known semi-closed position FB control system.

As shown in Fig. 6, the semi-closed position FB control system of the AC servomotor includes an adder-subtractor 612; an adder-subtractor 614; a position controller 61; a speed controller 62; a current controller 63; a first coordinate converter 64 that converts coordinates from a d-q coordinate system to a 3-phase coordinate system; a second coordinate converter 610 that converts coordinates from the 3-phase coordinate system to the d-q coordinate system; a PWM output unit 65 to which a 3-phase voltage command is input and which outputs a PWM pulse; an inverter (power converter) 66 including a switching element; a current detector 68; a position and speed calculation unit 611; the automatic adjuster 622; and encoder 69 that measures the number of rotations of a motor; a motor 67; and a machine 613 to be driven by the motor.

A motor rotation position or a motor rotation speed 616 calculated by the position and speed calculation unit 611 that calculates rotation position and speed of the motor from an output of the encoder 69 is input to the automatic adjuster 622.

The vibration suppression control unit 5 of the automatic adjuster 622 processes a rotation position command 615 so as not to excite vibration of an end portion of the machine 613 (machine end), and outputs a processed rotation position command 617, and the automatic adjuster 622 plays a role of automatically adjusting the vibration suppression control unit 5 as appropriate based on the motor rotation position 616.

The processed rotation position command 617 output from the automatic adjuster 622, and the motor rotation position 616 from the position and speed calculation unit 611 are input to the adder-subtractor 614, and a difference between the processed rotation position command 617 and the motor rotation position 616 is input to the position controller 61 as a position command.

The position controller 61 outputs a speed command 618, and the adder-subtractor 612 does not output a difference between the speed command 618 and a motor rotation speed 619 to the speed controller 62.

The position controller 61 uses the processed rotation position command 617 as a command, and executes position FB control on a speed and current control system of a minor loop system and an integral element as control targets.

When the number of inertias of the machine 613 is 1, and the machine 613 and a rotor of the motor are regarded as being elastically coupled to each other, a control target machine can be regarded as being a two-inertia system in which the machine 613 and the rotor of the motor are coupled to each other by a spring and a damper, and the control target machine has a frequency characteristic including one set of resonance and anti-resonance characteristics.

In addition, when the number of inertias of the machine 613 is 2, and when it is regarded that both are elastically coupled to each other and one is elastically coupled to the rotor of the motor, or when each of two inertias of the machine 613 is regarded as being elastically coupled to the rotor of the motor, a control target machine can be regarded as being a three-inertia system, and has a frequency characteristic including two sets of resonance and anti-resonance characteristics. An example of such a system is a case where a servomotor mechanism having two inertias in which inertia bodies move is installed on a frame having low rigidity, or the like.

As shown in the first embodiment, the automatic adjuster 622 does not require in-advance investigation on the resonance and anti-resonance characteristic of the machine, and can suppress vibration of the machine end by automatically adjusting the vibration suppression control unit 5 in a short time and in real time as appropriate, even when the machine end vibrates and a plurality of vibrations are observed as being superimposed in a response of the motor control system. Therefore, even in the present embodiment, similarly to the first embodiment, the automatic adjuster 622 can suppress vibration of the machine end by automatically adjusting the vibration suppression control unit 5 in a short time and in real time as appropriate.

According to the present embodiment, in the semi-closed position FB control system of the AC servomotor shown in Fig. 6, even when vibrations caused by resonance and anti-resonance characteristics of one or more control target machines are observed from a response of the motor control system, and vibration occurs at machine ends, since the automatic adjuster 622 is provided, it is not necessary to identify particularly the number of the mechanical resonances in advance. Further, according to the present embodiment, it is possible to suppress vibration of the machine ends by automatically adjusting the vibration suppression control unit 5 in a short time and in real time as appropriate.

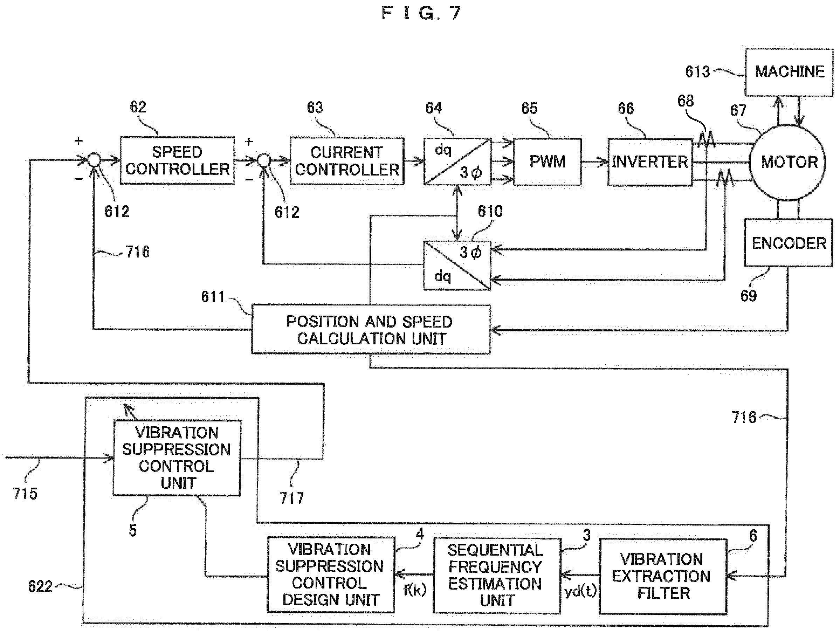

Incidentally, as shown in Fig. 7, the automatic adjuster 622 can also be applied to a semi-closed speed FB control system of the AC servomotor. In Fig. 7, the position controller 61 of Fig. 6 is removed. The reason is that even in the speed FB control system, vibrations caused by resonance and anti-resonance characteristics of one or more control target machines can be observed from a speed response 716 and vibration of machine ends can occur.

In Fig. 7, the vibration suppression control unit 5 of the automatic adjuster 622 processes a speed command 715 so as not to excite vibration of the end portion of the machine 613 (machine end), and outputs a processed speed command 717. The adder-subtractor 612 outputs a difference between the processed speed command 717 and the motor rotation speed 716 from the position and speed calculation unit 611, to the speed controller 62.

The automatic adjuster 622 can also automatically adjust the vibration suppression control unit 5 as shown in the first embodiment, using the speed response 716. Accordingly, even in the semi-closed speed FB control system of the AC servomotor shown in Fig. 7, since the automatic adjuster 622 is provided, it is not necessary to identify particularly the number of the mechanical resonances in advance.

Further, even in the semi-closed speed FB control system of the AC servomotor of Fig. 7, it is possible to suppress vibration of the machine end by automatically adjusting the vibration suppression control unit 5 in a short time and in real time as appropriate.

According to the present embodiment, in the semi-closed position FB control system of the AC servomotor or in the semi-closed speed FB control system of the AC servomotor, when vibration occurs at the machine end, it is not necessary to identify particularly the number of the mechanical resonances in advance, and it is possible to suppress vibration of the machine end by adjusting the vibration suppression control unit in a short time and in real time.

Incidentally, in the embodiments, the present invention can be applied to, for example, a semiconductor inspection device, a main motor control device for an electric vehicle, an electric power steering, and the like, in addition to the motor control device.

### REFERENCE SIGNS LIST

- 2: Automatic adjustment unit
- 3: Sequential frequency estimation unit
- 4: Vibration suppression control designing unit
- 5: Vibration suppression control unit
- 6: Vibration extraction filter
- 13: FB controller
- 14: Motor
- 15: Control target machine
- 31: Notch filter
- 32: Vibration detection unit
- 33: Convergence determination unit
- 34: Adaptive notch filter

## Claims

1. A motor control device comprising:
a vibration extraction filter (6) that passes signals only in a predetermined frequency band that are superimposed in a response of a motor control system due to a plurality of mechanical resonances, from a rotation speed response or a rotation position response of a motor (14);
a sequential frequency estimation unit (3) that sequentially estimates a frequency of each of the plurality of vibrations obtained from the vibration extraction filter (6), one by one, and that outputs a frequency estimation result as estimated frequency value series;
a vibration suppression control unit (5) that processes a command to be input to the motor control system, so as to suppress vibration occurring at an end portion of a machine (15) attached to the motor (14); and
a vibration suppression control designing unit that adjusts the vibration suppression control unit (5) based on the estimated frequency value series;
the vibration suppression control unit (5) is a notch filter;
**characterized in that**
the vibration suppression control designing unit (4) handles a predetermined time portion of the estimated frequency value series as point cloud data, divides the point cloud data into a plurality of clusters using unsupervised clustering, sets the number of the divided clusters as the number of superimposed vibrations of the plurality of vibrations, estimates a frequency of each vibration of the plurality of vibrations from point cloud data belonging to each cluster, to set the frequency as a vibration frequency estimation value, and adjusts the vibration suppression control unit (5) based on the number of superimposed vibrations and on the vibration frequency estimation value,
wherein the point cloud data is divided into two clusters based on an average value of the point cloud data, and an average value of each cluster is calculated,
when an absolute value of a difference between the calculated average values is a predetermined value or more, the number of superimposed vibrations is set to 2, and otherwise, is set to 1, and
when the number of superimposed vibrations is 2, the average value of each cluster is set as the vibration frequency estimation value, and when the number of superimposed vibrations is 1, the average value of the point cloud data is set as the vibration frequency estimation value.

2. The motor control device according to claim 1,
wherein the sequential frequency estimation unit (3) includes a vibration removal unit that removes only a predetermined frequency component, an adaptive estimation unit that sequentially estimates frequencies of the vibrations from a vibration waveform, a convergence determination unit (33), and a vibration detection unit (32),
the vibration removal unit processes the plurality of vibrations, and outputs a signal obtained by removing the predetermined frequency component from the plurality of vibrations, as a residual vibration signal,
the adaptive estimation unit sequentially estimates frequencies of one main vibration of the residual vibration signal, and sequentially outputs frequency estimation values as frequency estimation value signals,
the convergence determination unit (33) determines whether or not the frequency estimation value signals have converged, and outputs frequency estimation values of the frequency estimation value signals when it is determined that the frequency estimation value signals have converged, as the estimated frequency value series,
the vibration removal unit changes the predetermined frequency component to be removed, based on the estimated frequency value series, and
the vibration detection unit (32) determines whether or not the vibration continuously occurs in the residual vibration signal, and causes the adaptive estimation unit and the convergence determination unit (33) to operate when an occurrence of vibration is detected.

3. The motor control device according to claim 2,
wherein the vibration removal unit is a notch filter (31), the adaptive estimation unit is an adaptive notch filter (34),
the convergence determination unit (33) sequentially receives the frequencies of one main vibration of the plurality of vibrations to be sequentially estimated by the adaptive notch filter (34), as the frequency estimation value signals, and outputs the estimated frequency value series, and
the notch filter (31) changes a notch frequency of the notch filter (31) based on the output estimated frequency value series.

4. The motor control device according to claim 3,
wherein in an initial state where the adjustment of the vibration suppression control unit is started, the notch frequency of the notch filter (31) is set to be equal to or more than an upper limit of a vibration suppression band of the end portion of the machine (15) which the vibration suppression control unit (5) is responsible for.

5. The motor control device according to claim 1,
wherein in an initial state where the adjustment of the vibration suppression control unit (5) is started, the vibration suppression control unit (5) does not process the command to be input to the motor control system, and
after the vibration suppression control designing unit has completed the adjustment of the vibration suppression control unit (5) based on the estimated frequency value series, the vibration suppression control unit (5) starts processing the command to be input to the motor control system.

6. The motor control device according to claim 3,
wherein when the adaptive notch filter (34) sequentially estimates the frequencies, the adaptive notch filter (34) causes an update gain in a sequential update of the frequency to be variable, based on a current frequency estimation value.

7. An automatic adjustment method for motor control, the method comprising:
passing signals only in a predetermined frequency band that are superimposed in a response of a motor control system due to a plurality of mechanical resonances, from a rotation speed response or a rotation position response of a motor (14);
sequentially estimating a frequency of each of the plurality of extracted vibrations one by one, and outputting a frequency estimation result as estimated frequency value series; and
processing a command to be input to the motor control system, so as to suppress vibration occurring at an end portion of a machine (15) attached to the motor (14), by performing an adjustment based on the estimated frequency value series by a notch filter;
**characterized by**
handling a predetermined time portion of the estimated frequency value series is as point cloud data, dividing the point cloud data into a plurality of clusters using unsupervised clustering, setting the number of the divided clusters as the number of superimposed vibrations of the plurality of vibrations, estimating a frequency of each vibration of the plurality of vibrations from point cloud data belonging to each cluster, to set the frequency as a vibration frequency estimation value, and adjusting the vibration suppression control unit (5) based on the number of superimposed vibrations and on the vibration frequency estimation value,
wherein the point cloud data is divided into two clusters based on an average value of the point cloud data, and an average value of each cluster is calculated,
when an absolute value of a difference between the calculated average values is a predetermined value or more, the number of superimposed vibrations is set to 2, and otherwise, is set to 1, and
when the number of superimposed vibrations is 2, the average value of each cluster is set as the vibration frequency estimation value, and when the number of superimposed vibrations is 1, the average value of the point cloud data is set as the vibration frequency estimation value.

8. The automatic adjustment method for motor control according to claim 7,
wherein in an initial state, the command to be input to the motor control system is not processed, and
after the adjustment of the command based on the estimated frequency value series is completed, processing of the command to be input to the motor control system is started.

9. The automatic adjustment method for motor control according to claim 7,
wherein the sequential one-by-one estimation of the frequency of each of the plurality of vibrations is executed by a combination of a notch filter (31), an adaptive notch filter (34), and a determination on convergence of the adaptive notch filter (34).

## Patentansprüche

1. Motorsteuervorrichtung, die umfasst:
ein Vibrationsextraktionsfilter (6), das Signale, die in einer Antwort eines Motorsteuersystems wegen mehrerer mechanischer Resonanzen von einer Drehzahlantwort oder von einer Drehpositionsantwort eines Motors (14) überlagert sind, nur in einem vorgegebenen Frequenzband durchlässt;
eine Einheit (3) zur sequentiellen Frequenzschätzung, die eine Frequenz jeder der mehreren Vibrationen, die von dem Vibrationsextraktionsfilter (6) erhalten werden, einzeln nacheinander sequenziell schätzt und die ein Frequenzschätzergebnis als geschätzte Frequenzwertreihe ausgibt;
eine Vibrationsunterdrückungs-Steuereinheit (5), die einen in das Motorsteuersystem einzugebenden Befehl in der Weise verarbeitet, dass Vibration, die an einem Endabschnitt einer an dem Motor (14) angebrachten Maschine (15) auftritt, unterdrückt wird; und
eine Vibrationsunterdrückungssteuerungs-Planungseinheit, die die Vibrationsunterdrückungs-Steuereinheit (5) auf der Grundlage der geschätzten Frequenzwertreihe anpasst;
wobei die Vibrationsunterdrückungs-Steuereinheit (5) ein Kerbfilter ist;
**dadurch gekennzeichnet, dass**
die Vibrationsunterdrückungssteuerungs-Planungseinheit (4) einen vorgegebenen Zeitabschnitt der geschätzten Frequenzwertreihe als Punktwolkendaten behandelt, die Punktwolkendaten unter Verwendung unbeaufsichtigter Clusterbildung in mehrere Cluster teilt, die Anzahl der geteilten Cluster als die Anzahl überlagerter Vibrationen der mehreren Vibrationen einstellt, eine Frequenz jeder Vibration der mehreren Vibrationen von Punktwolkendaten, die zu jedem Cluster gehören, schätzt, um die Frequenz als einen Vibrationsfrequenz-Schätzwert einzustellen, und die Vibrationsunterdrückungs-Steuereinheit (5) auf der Grundlage der Anzahl überlagerter Vibrationen und des Vibrationsfrequenz-Schätzwerts anpasst,
wobei die Punktwolkendaten auf der Grundlage eines Durchschnittswerts der Punktwolkendaten in zwei Cluster geteilt werden und ein Durchschnittswert jedes Clusters berechnet wird,
wobei die Anzahl überlagerter Vibrationen auf 2 eingestellt wird, wenn ein Absolutwert einer Differenz zwischen den berechneten Durchschnittswerten ein vorgegebener Wert oder mehr ist, und andernfalls auf 1 eingestellt wird, und
der Durchschnittswert jedes Clusters als der Vibrationsfrequenz-Schätzwert eingestellt wird, wenn die Anzahl überlagerter Vibrationen 2 ist, und der Durchschnittswert der Punktwolkendaten als der Vibrationsfrequenz-Schätzwert eingestellt wird, wenn die Anzahl überlagerter Vibrationen 1 ist.

2. Motorsteuervorrichtung nach Anspruch 1,
wobei die Einheit (3) zur sequentiellen Frequenzschätzung eine Vibrationsentfernungseinheit, die nur eine vorgegebene Frequenzkomponente entfernt, eine Einheit zur adaptiven Schätzung, die Frequenzen der Vibrationen von einer Vibrationssignalform sequenziell schätzt, eine Konvergenzbestimmungseinheit (33) und eine Vibrationsdetektionseinheit (32) enthält,
die Vibrationsentfernungseinheit die mehreren Vibrationen verarbeitet und ein durch Entfernen der vorgegebenen Frequenzkomponente aus den mehreren Vibrationen erhaltenes Signal als ein Restvibrationssignal ausgibt,
die Einheit zur adaptiven Schätzung sequenziell Frequenzen einer Hauptvibration des Restvibrationssignals schätzt und sequenziell Frequenzschätzwerte als Frequenzschätzwertsignale ausgibt,
die Konvergenzbestimmungseinheit (33) bestimmt, ob die Frequenzschätzwertsignale konvergiert sind und, wenn bestimmt wird, dass die Frequenzschätzwertsignale konvergiert sind, Frequenzschätzwerte der Frequenzschätzwertsignale als die geschätzte Frequenzwertreihe ausgibt,
die Vibrationsentfernungseinheit die zu entfernende vorgegebene Frequenzkomponente auf der Grundlage der geschätzten Frequenzwertreihe ändert, und
die Vibrationsdetektionseinheit (32) bestimmt, ob die Vibration in dem Restvibrationssignal ununterbrochen auftritt, und veranlasst, dass die Einheit zur adaptiven Schätzung und die Konvergenzbestimmungseinheit (33) arbeiten, wenn ein Auftreten einer Vibration detektiert wird.

3. Motorsteuervorrichtung nach Anspruch 2,
wobei die Vibrationsentfernungseinheit ein Kerbfilter (31) ist,
die Einheit zur adaptiven Schätzung ein adaptives Kerbfilter (34) ist,
die Konvergenzbestimmungseinheit (33) die Frequenzen einer Hauptvibration der mehreren durch das adaptive Kerbfilter (34) sequenziell zu schätzenden Vibrationen als die Frequenzschätzwertsignale sequenziell empfängt und die geschätzte Frequenzwertreihe ausgibt, und
das Kerbfilter (31) eine Kerbfrequenz des Kerbfilters (31) auf der Grundlage der ausgegebenen geschätzten Frequenzwertreihe ändert.

4. Motorsteuervorrichtung nach Anspruch 3,
wobei in einem Anfangszustand, in dem die Anpassung der Vibrationsunterdrückungs-Steuereinheit begonnen wird, die Kerbfrequenz des Kerbfilters (31) gleich oder größer einem oberen Grenzwert eines Vibrationsunterdrückungsbands des Endabschnitts der Maschine (15), für die die Vibrationsunterdrückungs-Steuereinheit (5) verantwortlich ist, eingestellt wird.

5. Motorsteuervorrichtung nach Anspruch 1,
wobei die Vibrationsunterdrückungs-Steuereinheit (5) den in das Motorsteuersystem einzugebenden Befehl in einem Anfangszustand, in dem die Anpassung der Vibrationsunterdrückungs-Steuereinheit (5) begonnen wird, nicht verarbeitet, und
die Vibrationsunterdrückungs-Steuereinheit (5) die Verarbeitung des in das Motorsteuersystem einzugebenden Befehls beginnt, nachdem die Vibrationsunterdrückungssteuerungs-Planungseinheit die Anpassung der Vibrationsunterdrückungs-Steuereinheit (5) auf der Grundlage der geschätzten Frequenzwertreihe abgeschlossen hat.

6. Motorsteuervorrichtung nach Anspruch 3,
wobei das adaptive Kerbfilter (34) veranlasst, dass eine
Aktualisierungsverstärkung in einer sequenziellen Aktualisierung der Frequenz auf der Grundlage eines aktuellen Frequenzschätzwerts variabel ist, wenn das adaptive Kerbfilter (34) die Frequenzen sequenziell schätzt.

7. Automatisches Anpassungsverfahren für die Motorsteuerung, wobei das Verfahren umfasst:
Durchlassen von Signalen, die in einer Antwort eines Motorsteuersystems wegen mehrerer mechanischer Resonanzen von einer Drehzahlantwort oder von einer Drehpositionsantwort eines Motors (14) überlagert sind, nur in einem vorgegebenen Frequenzband;
Sequenzielles Schätzen einer Frequenz jeder der mehreren extrahierten Vibrationen einzeln nacheinander und Ausgeben eines Frequenzschätzergebnisses als geschätzte Frequenzwertreihe; und
Verarbeiten eines in das Motorsteuersystem einzugebenden Befehls in der Weise, dass Vibration, die an einem Endabschnitt einer an dem Motor (14) angebrachten Maschine (15) auftritt, unterdrückt wird, durch Ausführen einer Anpassung auf der Grundlage der geschätzten Frequenzwertreihe durch ein Kerbfilter;
**gekennzeichnet durch**
Behandeln eines vorgegebenen Zeitabschnitts der geschätzten Frequenzwertreihe als Punktwolkendaten, Teilen der Punktwolkendaten unter Verwendung unbeaufsichtigter Clusterbildung in mehrere Cluster, Einstellen der Anzahl der geteilten Cluster als die Anzahl überlagerter Vibrationen der mehreren Vibrationen, Schätzen einer Frequenz jeder Vibration der mehreren Vibrationen von Punktwolkendaten, die zu jedem Cluster gehören, um die Frequenz als einen Vibrationsfrequenz-Schätzwert einzustellen, und Anpassen der Vibrationsunterdrückungs-Steuereinheit (5) auf der Grundlage der Anzahl überlagerter Vibrationen und des Vibrationsfrequenz-Schätzwerts,
wobei die Punktwolkendaten auf der Grundlage eines Durchschnittswerts der Punktwolkendaten in zwei Cluster geteilt werden und ein Durchschnittswert jedes Clusters berechnet wird,
wobei die Anzahl überlagerter Vibrationen auf 2 eingestellt wird, wenn ein Absolutwert einer Differenz zwischen den berechneten Durchschnittswerten ein vorgegebener Wert oder mehr ist, und andernfalls auf 1 eingestellt wird, und
der Durchschnittswert jedes Clusters als der Vibrationsfrequenz-Schätzwert eingestellt wird, wenn die Anzahl überlagerter Vibrationen 2 ist, und der Durchschnittswert der Punktwolkendaten als der Vibrationsfrequenz-Schätzwert eingestellt wird, wenn die Anzahl überlagerter Vibrationen 1 ist.

8. Automatisches Anpassungsverfahren für die Motorsteuerung nach Anspruch 7,
wobei der in das Motorsteuersystem einzugebende Befehl in einem Anfangszustand nicht verarbeitet wird, und
die Verarbeitung des in das Motorsteuersystem einzugebenden Befehls begonnen wird, nachdem die Anpassung des Befehls auf der Grundlage der geschätzten Frequenzwertreihe abgeschlossen ist.

9. Automatisches Anpassungsverfahren für die Motorsteuerung nach Anspruch 7,
wobei die sequenzielle Schätzung der Frequenz jeder der mehreren Vibrationen einzeln nacheinander durch eine Kombination eines Kerbfilters (31), eines adaptiven Kerbfilters (34) und einer Bestimmung der Konvergenz des adaptiven Kerbfilters (34) ausgeführt wird.

## Revendications

1. Dispositif de commande de moteur comprenant :
un filtre d'extraction de vibration (6) qui laisse passer, parmi une réponse en vitesse de rotation ou une réponse en position de rotation du moteur (14),
uniquement les signaux appartenant à une bande de fréquences prédéterminée et superposés à ladite réponse en raison d'une pluralité de résonances mécaniques ;
une unité d'estimation de fréquence séquentielle (3) qui estime séquentiellement une fréquence de chacune de la pluralité de vibrations obtenues à partir du filtre d'extraction de vibration (6), une à une, et qui sort un résultat d'estimation de fréquence en tant que série de valeurs de fréquence estimée ;
une unité de commande de suppression de vibration (5) qui traite un ordre à entrer vers le système de commande de moteur, de façon à supprimer des vibrations se produisant à une portion d'extrémité d'une machine (15) attachée au moteur (14) ; et
une unité de conception de commande de suppression de vibration qui ajuste l'unité de commande de suppression de vibration (5) sur la base de la série de valeurs de fréquence estimée ;
l'unité de commande de suppression de vibration (5) étant un filtre coupe-bande ;
**caractérisé en ce que**
l'unité de conception de commande de suppression de vibration (4) gère une portion temporelle prédéterminée de la série de valeurs de fréquence estimée en tant que données de nuage de points, divise les données de nuage des points en une pluralité de grappes à l'aide d'un regroupement non supervisé, en tant que nombre de vibrations superposées de la pluralité de vibrations, estime une fréquence de chaque vibration de la pluralité de vibrations à partir de données de nuage de points appartenant à chaque grappe, pour définir la fréquence en tant que valeur d'estimation de fréquence de vibration, et ajuste l'unité de commande de suppression de vibration (5) sur la base du nombre de vibrations superposées et de la valeur d'estimation de fréquence de vibration,
dans lequel les données de nuage de points sont divisées en deux grappes sur la base d'une valeur moyenne des données de nuage de points, et une valeur moyenne de chaque grappe est calculée,
quand une valeur absolue d'une différence entre les valeurs moyennes calculées est une valeur prédéterminée ou supérieure, le nombre de vibrations superposées est défini comme étant 2, et autrement, est défini comme étant 1, et
quand le nombre de vibrations superposées est de 2, la valeur moyenne de chaque grappe est définie en tant que valeur d'estimation de fréquence de vibration, et quand le nombre de vibrations superposées est de 1, la valeur moyenne des données de nuage de points est définie en tant que valeur d'estimation de fréquence de vibration.

2. Dispositif de commande de moteur selon la revendication 1,
dans lequel l'unité d'estimation de fréquence séquentielle (3) inclut une unité d'élimination de vibration qui élimine uniquement une composante de fréquence prédéterminée, une unité d'estimation adaptative qui estime séquentiellement des fréquences des vibration à partir d'une forme d'onde de vibration, une unité de détermination de convergence (33), et une unité de détection de vibration (32),
l'unité d'élimination de vibration traite la pluralité de vibrations, et sort un signal obtenu en éliminant la composante de fréquence prédéterminée de la pluralité de vibrations, en tant que signal de vibration résiduelle,
l'unité d'estimation adaptative estime séquentiellement des fréquences d'une vibration principale du signal de vibration résiduelle, et sort séquentiellement des valeurs d'estimation de fréquence en tant que signaux de valeurs d'estimation de fréquence,
l'unité de détermination de convergence (33) détermine si oui ou non les signaux de valeurs d'estimation de fréquence ont convergé, et sort des valeurs d'estimation de fréquence des signaux de valeurs d'estimation de fréquence quand il est déterminé que les signaux de valeurs d'estimation de fréquence ont convergé, en tant que série de valeurs de fréquence estimée,
l'unité d'élimination de vibration change la composante de fréquence prédéterminée à éliminer, sur la base de la série de valeurs de fréquence estimée, et
l'unité de détection de vibration (32) détermine si oui ou non une vibration se produit en continu dans le signal de vibration résiduelle, et amène l'unité d'estimation adaptative et l'unité de détermination de convergence (33) à fonctionner quand il est détecté qu'une vibration se produit.

3. Dispositif de commande de moteur selon la revendication 2,
dans lequel l'unité d'élimination de vibration est un filtre coupe-bande (31),
l'unité d'estimation adaptative est un filtre coupe-bande adaptatif (34),
l'unité de détermination de convergence (33) reçoit séquentiellement les fréquences d'une vibration principale de la pluralité de vibrations à estimer séquentiellement par le filtre coupe-bande adaptatif (34), comme étant les signaux de valeur d'estimation de fréquence, et sort la série de valeurs de fréquence estimée, et
le filtre coupe-bande (31) change une fréquence d'encoche du filtre coupe-bande (31) sur la base de la série de valeurs de fréquence estimée sorties.

4. Dispositif de commande de moteur selon la revendication 3,
dans lequel, dans un état initial où l'ajustement de l'unité de commande de suppression de vibration est démarré, la fréquence d'encoche du filtre coupe-bande (31) est définie comme étant égale ou supérieure à une limite supérieure d'une bande de suppression de vibration de la portion d'extrémité de la machine (15) dont l'unité de commande de suppression de vibration (5) est responsable.

5. Dispositif de commande de moteur selon la revendication 1,
dans lequel, dans un état initial où l'ajustement de l'unité de commande de suppression de vibration (5) est démarré, l'unité de commande de suppression de vibration (5) ne traite pas l'ordre à entrer vers le système de commande de moteur, et
après que l'unité de conception de commande de suppression de vibration a terminé l'ajustement de l'unité de commande de suppression de vibration (5) sur la base de la série de valeurs de fréquence estimée, l'unité de commande de suppression de vibration (5) démarre un traitement de l'ordre à entrer vers le système de commande de moteur.

6. Dispositif de commande de moteur selon la revendication 3,
dans lequel, quand le filtre coupe-bande adaptatif (34) estime séquentiellement les fréquences, le filtre coupe-bande adaptatif (34) amène un gain de mise à jour dans une mise à jour séquentielle de la fréquence à être variable, sur la base d'une valeur d'estimation de fréquences actuelle.

7. Procédé d'ajustement automatique pour une commande de moteur, le procédé comprenant les étapes consistant à :
laisser passer, parmi une réponse en vitesse de rotation ou une réponse en position de rotation du moteur (14), uniquement les signaux appartenant à une bande de fréquences prédéterminée et superposés à ladite réponse en raison d'une pluralité de résonances mécaniques ;
estimer séquentiellement une fréquence de chacune de la pluralité de vibrations extraites une à une, et sortir un résultat d'estimation de fréquence en tant que série de valeurs de fréquence estimée ; et
traiter un ordre à entrer vers le système de commande de moteur, de façon à supprimer une vibration se produisant à une portion d'extrémité d'une machine (15) attachée au moteur (14), en effectuant un ajustement sur la base de la série de valeurs de fréquence estimée par un filtre coupe-bande ;
**caractérisé par** les étapes consistant à
gérer une portion temporelle prédéterminée de la série de valeurs de fréquence estimée en tant que données de nuage de points, diviser les données de nuage de points en une pluralité de grappes à l'aide d'un regroupement non supervisé, définir le nombre de grappes divisées en tant que nombre de vibrations superposées de la pluralité de vibrations, estimer une fréquence de chaque vibration de la pluralité de vibrations à partir de données de nuage de points appartenant à chaque grappe, pour définir la fréquence en tant que valeur d'estimation de fréquence de vibration, et ajuster l'unité de commande de suppression de vibration (5) sur la base du nombre de vibrations superposées et de la valeur d'estimation de fréquences de vibration,
dans lequel les données de nuage de points sont divisées en deux grappes sur la base d'une valeur moyenne des données de nuage de points, et une valeur moyenne de chaque grappe est calculée,
quand une valeur absolue d'une différence entre les valeurs moyennes calculées est une valeur prédéterminée ou supérieure, le nombre de vibrations superposées est défini comme étant 2, et autrement, est défini comme étant 1, et
quand le nombre de vibrations superposées est de 2, la valeur moyenne de chaque grappe est définie en tant que valeur d'estimation de fréquence de vibration, et quand le nombre de vibrations superposées est de 1, la valeur moyenne des données de nuage de points est définie en tant que valeur d'estimation de fréquence de vibration.

8. Procédé d'ajustement automatique pour une commande de moteur selon la revendication 7,
dans lequel, dans un état initial, l'ordre à entrer vers le système de commande de moteur n'est pas traité, et
après que l'ajustement de l'ordre sur la base de la série de valeurs de fréquence estimée est terminé, un traitement de l'ordre à entrer vers le système de commande est démarré.

9. Procédé d'ajustement automatique pour une commande de moteur selon la revendication 7,
dans lequel l'estimation séquentielle une à une de la fréquence de chacune de la pluralité de vibrations est exécutée en combinant un filtre coupe-bande (31), un filtre coupe-bande adaptatif (34), et une détermination d'une convergence du filtre coupe-bande adaptatif (34).
